# EUROPEAN PATENT APPLICATION

(11) **EP 4 374 748 A2**
(43) Date of publication of application: **29.05.2024**
(21) Application number: 22846293.3
(22) Date of filing: 22.07.2022
(51) Int. Cl.: A47J 31/02, A47J 31/52, A47J 31/56, A47J 31/46

(54) **AUTOMATIC DRIP COFFEE MACHINE**

(30) Priority: 23.07.2021 KR 20210097211; 21.07.2022 KR 20220090622
(71) Applicant: Nobletree Co., Ltd., Suwon-si, Gyeonggi-do 16209 (KR)
(72) Inventor: NAM, Hong Woo, Suwon-si, Gyeonggi-do 16532 (KR)
(74) Representative: Busana, Omar
(86) International application number: PCT/KR2022/010780
(87) International publication number: WO 2023/003423

(57) **Abstract**

An automatic drip coffee machine includes a water heater system including a high-temperature water boiler and a medium-temperature water boiler, and a drip system including drip nozzles to receive mixed hot water of a desired temperature according to high-temperature water heated by mixing the high-temperature water boiler and medium-temperature water heated by the medium-temperature water boiler, and drip nozzle transfer modules to respectively supply the mixed hot water to drippers while respectively transferring the drip nozzles in an X-axis direction and a Y-axis direction. The water heater system includes a water heater control unit to control the high-temperature water boiler and the medium-temperature water boiler, and the drip system includes user interface units to control the drip nozzles and the drip nozzle transfer modules, and a main control unit to control the water heater control unit and the user interface units.

## Description

### Technical Field

The present disclosure relates to a drip coffee machine, and more particularly, to an automatic drip coffee machine.

The present disclosure is derived from research conducted by Noble Tree Co., Ltd. as part of the Ministry of Small and Medium Venture Enterprises (Startup Growth Technology Development Project). [Research period: 2020.07.31-2021.07.30, Research management organization: Small and Medium Technology Information Promotion Agency, Research project name: Development of spout stand-alone intelligent automatic drip machine (3 units), Project identification number: S2856246]

### Background Art

Drip coffee refers to coffee made by pouring hot water (or boiling water) on finely ground coffee beans. Drip coffee has the disadvantage that a person has to take the time to pour hot water into a dripper including a filter containing ground coffee, which makes it difficult for coffee shops and cafes to provide services due to lack of manpower and differences in individual skills. In order to improve a method of making hand drip coffee, an automatic drip coffee machine was proposed.

In general, when extracting drip coffee, the temperature of hot water to be extracted varies with a degree of roasting or grinding of coffee, a type of coffee, and a density, and the hot water in a kettle gradually cools down during an extraction process so that the temperature of hot water may cool down at each extraction stage. Therefore, when extracting drip coffee, precise temperature control of hot water according to extraction stages and coffee conditions determines the extraction quality.

However, an automatic drip coffee machine in the related art includes one boiler, thereby making it impossible to control the temperature according to the conditions of coffee, and thus, it is difficult to extract drip coffee of good quality. In addition, the automatic drip coffee machine in the related art not only does not precisely control the temperature or flow rate of the hot water supplied to a dripper, but also is difficult to precisely control a drip pattern of the hot water supplied to the dripper, which may deteriorate the quality of drip coffee, for example, the flavor, etc.

### Disclosure

### Technical Problem

The present disclosure provides an automatic drip coffee machine capable of precisely controlling the temperature or flow rate of hot water supplied to a plurality of drippers.

The present disclosure also provides an automatic drip coffee machine capable of precisely controlling a drip pattern of hot water supplied to a plurality of drippers.

### Technical Solution

According to an embodiment, an automatic drip coffee machine of the present disclosure includes a water heater system including a high-temperature water boiler, and a medium-temperature water boiler disposed away from the high-temperature water boiler, and a drip system including a plurality of drip nozzles configured to receive mixed hot water of a desired temperature by high-temperature water heated by mixing the high-temperature water boiler and medium-temperature water heated by the medium-temperature water boiler, and a plurality of drip nozzle transfer modules configured to respectively supply the mixed hot water to a plurality of drippers while respectively transferring the plurality of drip nozzles in an X-axis direction and a Y-axis direction.

The water heater system includes a water heater control unit configured to control the high-temperature water boiler and the medium-temperature water boiler, and the drip system includes a plurality of user interface units configured to control the plurality of drip nozzles and the plurality of drip nozzle transfer modules, and a main control unit configured to control the water heater control unit and the plurality of user interface units.

According to an embodiment, an automatic drip coffee machine of the present disclosure includes a high-temperature water boiler, and a medium-temperature water boiler disposed away from the high-temperature water boiler and a drip system including a plurality of drip nozzles configured to receive mixed hot water of a desired temperature by high-temperature water heated by mixing the high-temperature water boiler and medium-temperature water heated by the medium-temperature water boiler, and a plurality of drip nozzle transfer modules configured to respectively supply the mixed hot water to a plurality of drippers while respectively transferring the plurality of drip nozzles in an X-axis direction and a Y-axis direction.

The water heater system includes a plurality of high-temperature water discharge pipes configured to discharge high-temperature water heated by the high-temperature water boiler, a plurality of medium-temperature water discharge pipes configured to discharge medium-temperature water heated by the medium-temperature water boiler, a plurality of high-temperature water pumps respectively connected to the plurality of high-temperature water discharge pipes, a plurality of medium-temperature water pumps respectively connected the plurality of medium-temperature water discharge pipes, a plurality of high-temperature water supply pipes respectively connected to the plurality of high-temperature water pumps, a plurality of medium-temperature water supply pipes respectively connected to the plurality of medium-temperature water pumps, a plurality of mixing connectors connected to the plurality of high-temperature water supply pipes and the plurality of medium-temperature water supply pipes, and a plurality of hot water supply pipes respectively connected to the plurality of mixing connectors. The drip system includes a plurality of user interface units configured to respectively control the plurality of drip nozzles and the plurality of drip nozzle transfer modules.

### Advantageous Effects

The automatic drip coffee machine of the present disclosure may include the high-temperature water boiler and the medium-temperature water boiler, thereby precisely controlling the temperature of hot water supplied to drippers as well as include various valves, thereby precisely controlling the flow rate of hot water. Accordingly, the automatic drip coffee machine of the present disclosure may increase the quality of drip coffee, for example, flavor.

The automatic drip coffee machine of the present disclosure may include a plurality of drippers, thereby easily handling even many customers coming to coffee shops or cafes. The automatic drip coffee machine of the present disclosure may be very helpful in operations of coffee shops and cafes, and also reduce the making cost of drip coffee.

The automatic drip coffee machine of the present disclosure may precisely control drip patterns of hot water supplied to the drippers. Accordingly, the automatic drip coffee machine of the present disclosure may accommodate respective drip patterns of users and make drip coffee according to drip conditions set by the users.

### Description of Drawings

FIG. 1 is a schematic conceptual diagram illustrating an automatic drip coffee machine according to an embodiment of the present disclosure.
FIGS. 2 and 3 are a perspective view and a front view, respectively, for explaining a drip system of the automatic drip coffee machine of the present disclosure.
FIGS. 4 to 6 are a top plan view, a side view, and a bottom plan view, respectively, of the drip system of the automatic drip coffee machine of the present disclosure.
FIGS. 7 and 8 are a front view and a perspective view, respectively, for explaining a water heater system of the automatic drip coffee machine of the present disclosure.
FIG. 9 is a front view illustrating a high-temperature water boiler included in the water heater system of the automatic drip coffee machine of the present disclosure.
FIG. 10 is a diagram for illustrating heat wires included in the high-temperature water boiler of FIG. 9.
FIG. 11 is a front view illustrating a medium-temperature water boiler included in the water heater system of the automatic drip coffee machine of the present disclosure.
FIG. 12 is a diagram illustrating a heating wire included in the medium-temperature water boiler of FIG. 11.
FIGS. 13 to 17 are diagrams for illustrating a drip nozzle transfer module included in the drip system of the automatic drip coffee machine of the present disclosure.
FIG. 18 is a block diagram illustrating a configuration of the drip system of the automatic drip coffee machine of the present disclosure.
FIG. 19 is a block diagram illustrating a configuration of the water heater system of the automatic drip coffee machine of the present disclosure.
FIG. 20 is a diagram illustrating a first embodiment of a hot water flow in the automatic drip coffee machine of the present disclosure.
FIG. 21 is a diagram illustrating a second embodiment of a hot water flow in the automatic drip coffee machine of the present disclosure.
FIG. 22 is a flowchart for illustrating a method of making drip coffee using the automatic drip coffee machine of the present disclosure.

### Best Mode

### Mode for Invention

Hereinafter, embodiments of the present disclosure will be described in detail with reference to the accompanying drawings. The following embodiments of the present disclosure may be implemented only in any one of the embodiments, and the following embodiments may be implemented in combination with one or more of the embodiments. Therefore, the present disclosure is not construed as limited to one embodiment.

In this specification, singular form of the components may include plural forms, unless the context clearly indicates otherwise. In this specification, the drawings are exaggerated to illustrate the present disclosure more clearly.

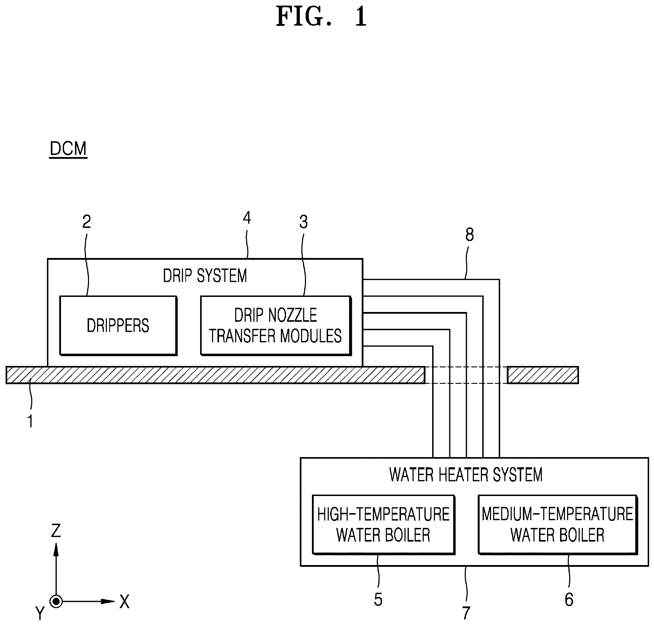

FIG. 1 is a schematic conceptual diagram illustrating an automatic drip coffee machine (DCM) according to an embodiment of the present disclosure.

Specifically, the automatic DCM may include a drip system 4, a water heater system 7, and a plurality of high-temperature water supply pipes 8 connecting the water heater system 7 to the drip system 4. The drip system 4 may mean a drip coffee extraction system.

The drip system 4 may be located on a table 1. The table 1 may be the floor on which the drip system 4 is located. The drip system 4 may include a plurality of drippers 2 and a plurality of drip nozzle transfer modules 3. In the drip system 4, one dripper and one drip nozzle transfer module may be configured as a set

The water heater system 7 may be located at the bottom of the table 1. The water heater system 7 may include a high-temperature water boiler 5, and a medium-temperature water boiler 6 disposed away from the high-temperature water boiler 5. The high-temperature water boiler 5 may be a boiler that heats cold water (or room temperature water) to a high temperature, for example, 85 °C to 98 °C, to supply high-temperature water. The medium-temperature water boiler 6 may be a boiler that heats cold water to a medium temperature lower than a high temperature, for example, 70 °C to 84 °C, to supply medium-temperature water. The medium-temperature water boiler 6 may be referred to as a low-temperature water boiler as a concept in contrast to the high-temperature water boiler 5. Hereinafter, high-temperature water may mean hot water of 85 °C to 98 °C, and medium-temperature water may mean hot water of 70 °C to 84 °C.

Hot water mixed with high-temperature water and medium-temperature water made by the water heater system 7 may be supplied to the drip system 4 through the plurality of high-temperature water supply pipes 8. The water heater system 7 may include the high-temperature water boiler 5 and the medium-temperature water boiler 6 to control flow rate of high-temperature water and medium-temperature water, thereby precisely controlling the temperature of hot water supplied to the drip system 4. In the present embodiment, the high-temperature water supply pipes 8 are five for convenience. The five high-temperature water supply pipes 8 may be supplied to the five drippers 2.

Configurations of the drip system 4, the water heater system 7, and the high-temperature water supply pipes 8 are described below in more detail. The configurations of the drip system 4, the water heater system 7, and the high-temperature water supply pipes 8 described below are intended to implement the spirit of the present disclosure, and the present disclosure is not limited to the following configurations.

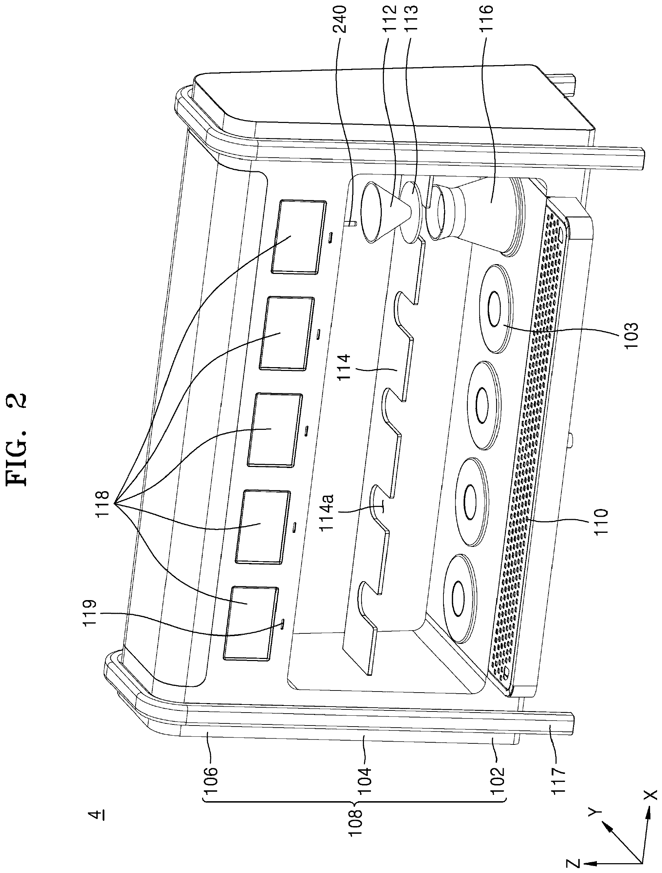

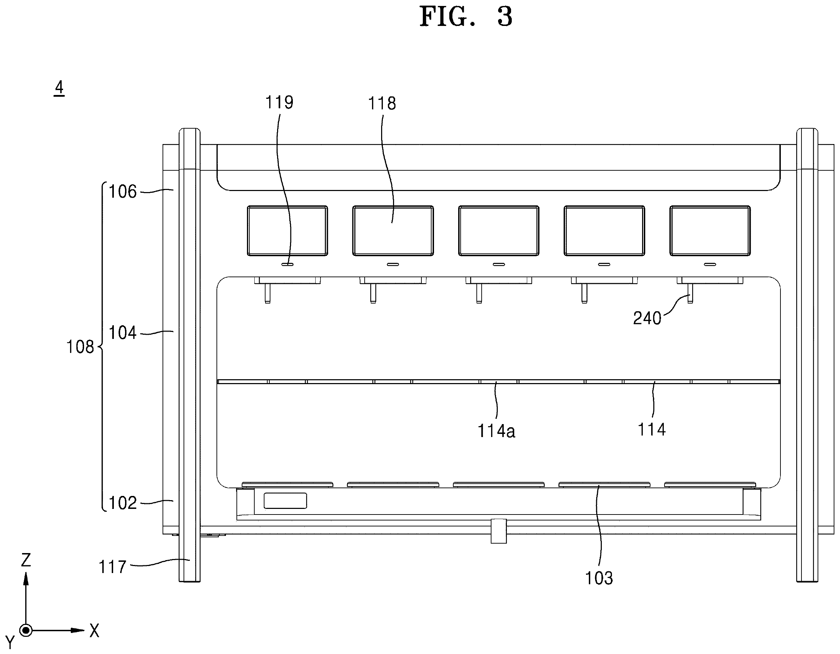

FIGS. 2 and 3 are a perspective view and a front view, respectively, for explaining a drip system of the automatic DCM of the present disclosure.

Specifically, the drip system 4 of the automatic DCM of FIG. 1 of the present disclosure may include a body portion 108. The body portion 108 may include a lower body portion 102, an intermediate body portion 104, and an upper body portion 106. The lower body portion 102, the middle body portion 104, and the upper body portion 106 may be configured as one body and, as needed, separate bodies.

Support portions 117 may be installed around the body portion 108. The support portions 117 may separate the body portion 108 from the table 1 of FIG. 1. The transmission of vibration of the table 1 of FIG. 1 to the body portion 108 may be reduced due to the support portions 117. In some embodiments, the support portions 117 may surround both sides of the body portion 108.

The lower body portion 102 may have an X-Y plane (X-Y horizontal plane) in a horizontal direction (X-axis direction and Y-axis direction) with respect to the floor supported by the table 1 of FIG. 1 or the drip system 4. The middle body portion 104 may extend from the lower body portion 102 in a vertical direction (Z axis direction). The upper body portion 106 may be configured to extend from the middle body portion 104 in the horizontal direction (X-axis direction and Y-axis direction) and face and be spaced apart from the lower body portion 102.

A drip container 116 may be installed in a container seating portion 103 of the lower body portion 102. The drip container 116 may contain drip coffee. A first drain portion 110 discharging drip coffee overflowing from the drip container 116 or hot water erroneously discharged from the drip nozzle 240 may be installed around the container seating portion 103.

The dripper holder 114 may be mechanically connected to the middle body portion 104. The dripper holder 114 may be attachable to and detachable from the middle body portion 104. A dripper holder groove 114a and a dripper support 113 may be installed in the dripper holder 114. A dripper 112 may be installed in the dripper holder 114 on the drip container 116, that is, the dripper support 113 installed in the dripper holder groove 114a.

The dripper 112 may correspond to the drippers 2 of FIG. 2. The dripper 112 may be for 1 to 4 people. The dripper 112 may be of various kinds, such as a Hario dripper, a Kalita dripper, a Kono dripper, a Melitta dripper, a Kalita wave dripper, etc. A filtration filter containing coffee powder may be installed in the dripper 112. In the drawing, the dripper 112 is installed in the dripper support 113 of the dripper holder 114, but the dripper 112 may be installed directly in the drip container 116. The dripper 112 may be detachable.

In FIG. 1, only one dripper 112 is shown for convenience, but a plurality of drippers 112 may be installed in the drip system 4 of the present embodiment. The dripper 112 of FIG. 2 may correspond to the drippers 2 of FIG. 1. Accordingly, the automatic DCM of FIG. 1 of the present disclosure may easily handle even many customers coming to coffee shops or cafes, and reduce the making cost of drip coffee.

A plurality of drip nozzles 240 receiving hot water made from the high-temperature water boiler 5 in FIG. 1 and the medium-temperature water boiler 6 of FIG. 1 and discharging the hot water to the dripper 112 may be installed inside the upper body portion 106. The hot water may be mixed hot water of the desired temperature made from the high-temperature water boiler 5 in FIG. 1 and the medium-temperature water boiler 6 of FIG. 1 as described above.

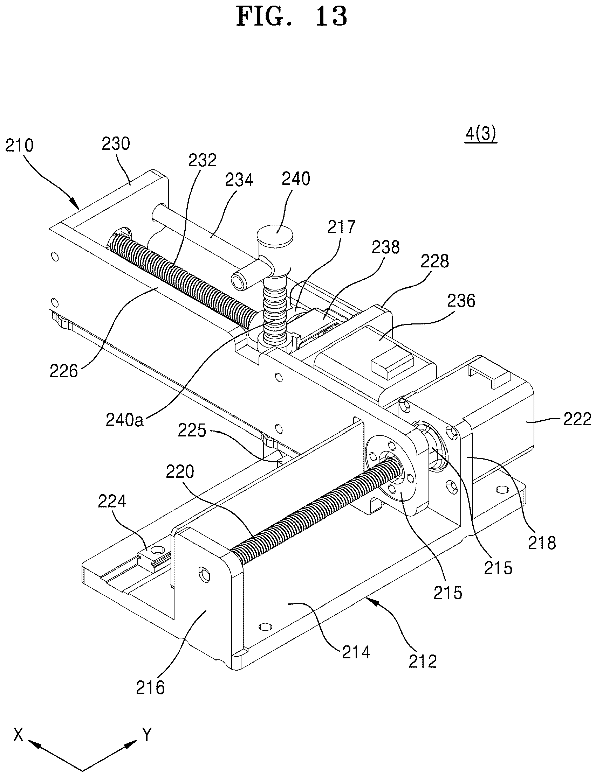

The drip system 4 may include the drip nozzle transfer modules 3 of FIG. 1 that respectively transfer the drip nozzles 240 in the X-axis direction and the Y-axis direction on a plane (X-Y plane) horizontal to the lower body portion 102. The drip nozzle transfer modules 3 of FIG. 1 may move the nozzles 240 in the direction (Z direction) perpendicular to the plane (X-Y plane) horizontal to the lower body portion 102. Configurations of the drip nozzle transfer modules 3 of FIG. 1 are described in detail with reference to FIGS. 13 to 17 below.

The drip system 4 may include a plurality of user interface units 118 controlling the drip nozzles 240 and the drip nozzle transfer modules 3 of FIG. 1. In the present embodiment, the five user interface units 118 may be installed according to the drippers 112 in FIG. 1 and the drip nozzles 240. The user interface units 118 may be input units used to input control parameters used in making drip coffee. The user interface units 118 may be touch panels installed on a surface of the upper body portion 106 to directly input the control parameters. The user interface units 118 may be included in a control unit in a broad sense. A status display unit 119 externally displaying an operation status of the drip system 4 may be installed on the upper body portion 106. The status display unit 119 may include an LED located on a PCB substrate.

As described above, the drip system 4 of the automatic DCM of FIG. 1 of the present disclosure may automatically make drip coffee by moving the drip nozzles 240 in the X-axis direction and the Y-axis direction by using the drip nozzle transfer modules 3 of FIG. 1 and passing hot water heated in the high-temperature water boiler 5 of FIG. 1 and the medium-temperature water boiler 6 of FIG. 1 through coffee powder on a filtration filter in the dripper 112.

The automatic DCM of FIG. 1 may automatically make drip coffee, so coffee shops and cafes may provide services despite lack of manpower and differences in individual skills. The automatic DCM of FIG. 1 may vary the temperature of hot water for each of the drip nozzles 240 to proceed with a drip process in accordance with the characteristics of coffee powder. The automatic DCM of FIG. 1 may improve the quality of drip coffee by varying the temperature in each of drip process operations.

The drip system 4 of the automatic DCM of FIG. 1 may precisely control the temperature or flow rate of hot water provided to the dripper 112 by optimizing the configuration of each of the high-temperature water boiler 5 of FIG. 1, the medium-temperature water boiler 6 of FIG. 1, and the drip nozzle transfer modules 3 of FIG. 1.

In addition, the drip system 4 of the automatic DCM of FIG. 1 may precisely control drip patterns of hot water supplied to the drip 112 through the drip nozzles 240 by optimizing the configurations of the drip nozzle transfer modules 3 of FIG. 1. The drip patterns may be various patterns such as a spiral pattern, a coffee bean pattern, a dot pattern, a spring pattern, a petal pattern, a coin pattern, etc.

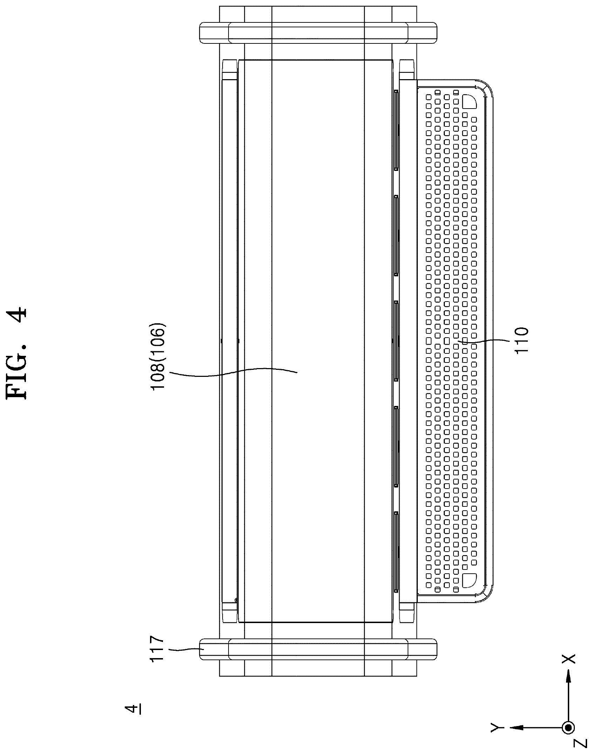

FIGS. 4 to 6 are a top plan view, a side view, and a bottom plan view of the drip system of the automatic DCM of the present disclosure, respectively.

Specifically, as shown in FIG. 4, the drip system 4 of the automatic DCM of FIG. 1 may include the body portion 108. The body portion 108 may include the upper body portion 106. The support portions 117 may be located on both sides of the upper body portion 106. As shown in FIG. 4, the first draining portion 110 may be located in front of the body portion 108.

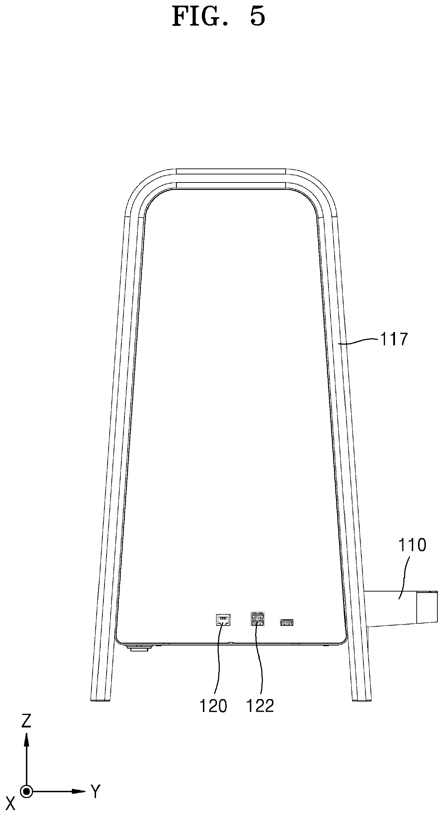

As shown in FIG. 5, the support portions 117 may be located to surround the body portion 108. Connection terminals 120 and 122 may be installed on the lower body portion 102. The connection terminals 120 and 122 may include a communication connection terminal 120, such as an Ethernet connection terminal and a data connection terminal 122, such as a USB terminal.

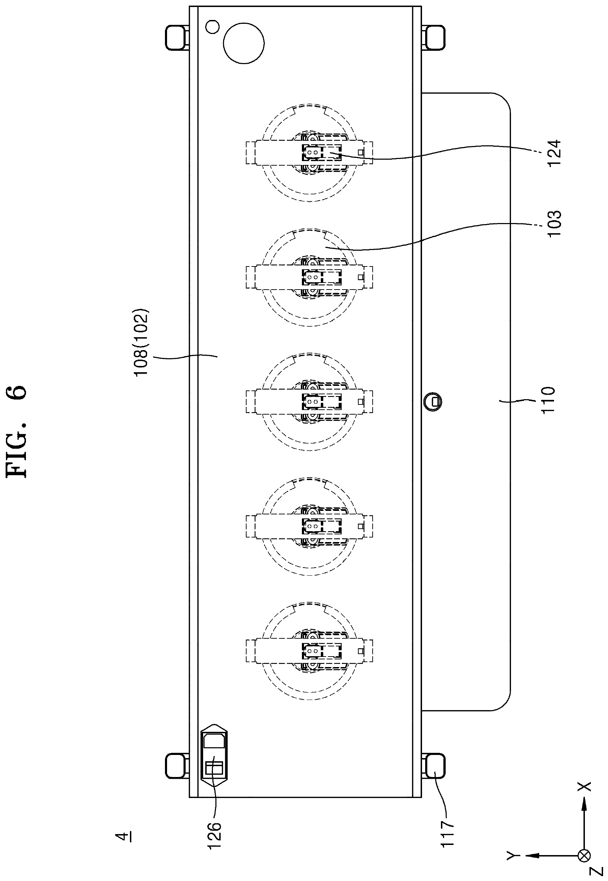

As shown in FIG. 6, the container seating portion 103 may be located in the lower body portion 102. A plurality of container seating portions 103 may be provided in accordance with drip nozzles. A weight measurement unit 124 capable of measuring the weight (or load) of drip coffee contained in the drip container 116 may be located below the container seating portion 103. The weight measurement unit 124 may measure the pure weight of drip coffee in the drip container 116 and send the pure weight to a main control unit in real time, thereby improve the extraction accuracy of drip coffee. In addition, an on-off switch 126 capable of turning on and off the power of the drip system 4 may be located in the lower body portion 102.

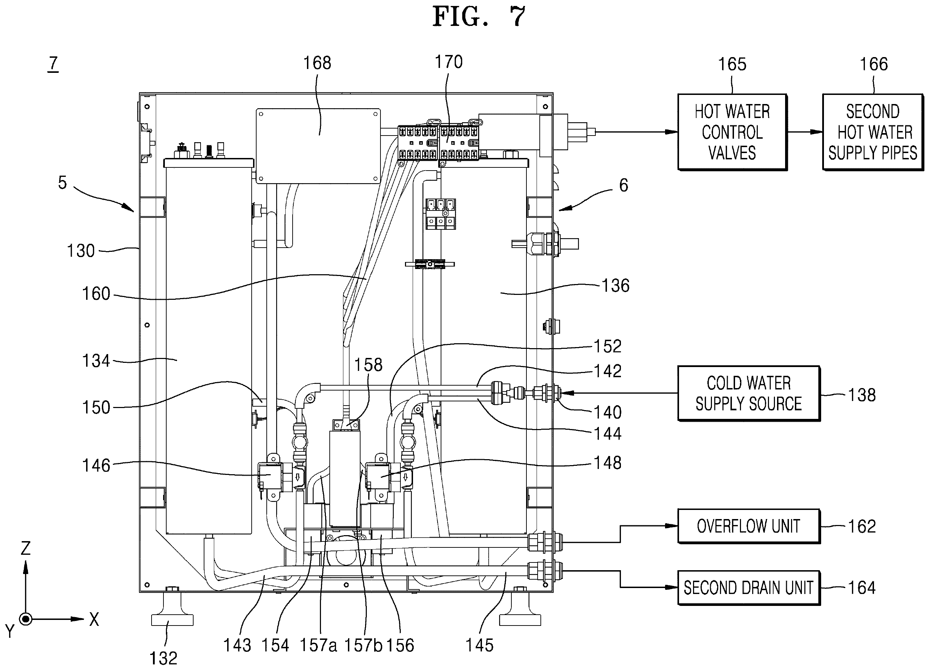

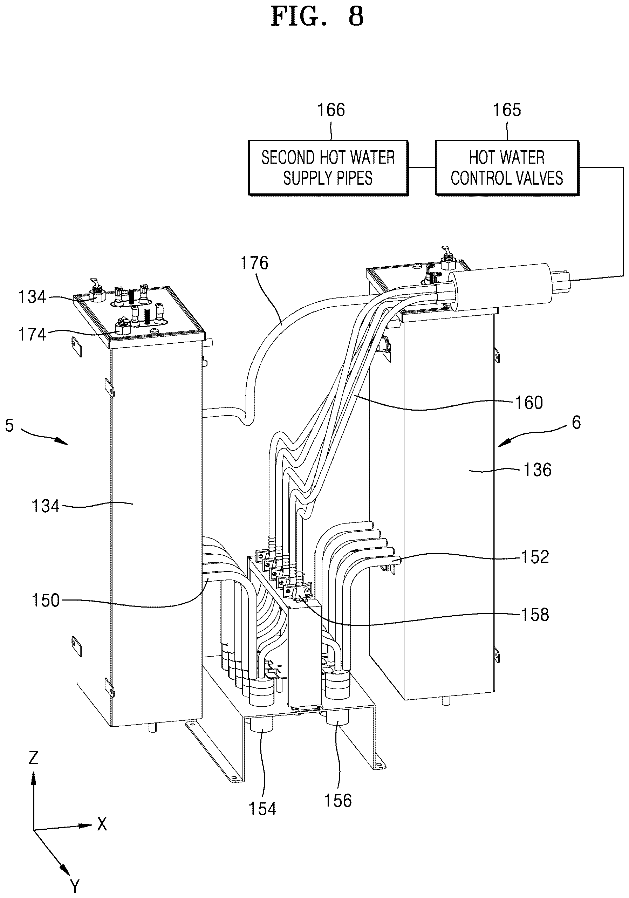

FIGS. 7 and 8 are a front view and a perspective view for explaining a water heater system of the automatic DCM of the present disclosure, respectively.

Specifically, the water heater system 7 of the automatic DCM of FIG. 1 of the present disclosure may include a high-temperature water boiler tank 134 and a medium-temperature water boiler tank 136 located within a water heater body 130. The water heater body support 132 may be installed on the bottom of the water heater body 130. The high-temperature water boiler tank 134 and the medium-temperature water boiler tank 136 may correspond to the high-temperature water boiler 5 and the medium-temperature water boiler 6 of FIG. 1, respectively.

Cold water supplied from a cold water supply source 138 through a cold water inlet 140 may be supplied to the high-temperature water boiler tank 134 through a first cold water supply pipe 142. A first cold water control valve 146, for example, a solenoid valve, may be connected to the first cold water supply pipe 142 to adjust a cold water supply amount or a cold water supply speed.

Cold water supplied from the cold water supply source 138 through the cold water inlet 140 may be supplied to the medium-temperature water boiler tank 136 through a second cold water supply pipe 144. A second cold water control valve 148, for example, a solenoid valve, may be connected to the second cold water supply pipe 144 to adjust the cold water supply amount or the cold water supply speed. The first cold water control valve 146 and the second cold water control valve 148 may be controlled by the user interface unit 118 of FIGS. 2 and 3.

The high-temperature water boiler tank 134 may heat cold water to discharge high-temperature water. The high-temperature water discharged from the high-temperature water boiler tank 134 may be discharged through a plurality of high-temperature water discharge pipes 150, for example, five high-temperature water discharge pipes 150, as shown in FIG. 8. The medium-temperature water boiler tank 136 may heat cold water to discharge medium-temperature water. The medium-temperature water discharged from the medium-temperature water boiler tank 136 may be discharged through a plurality of medium-temperature water discharge pipes 152, for example, five medium-temperature water discharge pipes 152, as shown in FIG. 8.

A plurality of high-temperature water pumps 154 may be connected to the high-temperature water discharge pipes 150 as shown in FIG. 8. The high-temperature water pumps 154 may be respectively installed in the high-temperature water discharge pipes 150. The high-temperature water pumps 154 may pump high-temperature water to discharge high-temperature water to a plurality of high-temperature water supply pipes 157a, such as five high-temperature water supply pipes 157a. A plurality of medium-temperature water pumps 156, such as five medium-temperature water pumps 156, may be connected to the medium-temperature water discharge pipes 152. The medium-temperature water pumps 156 may pump medium-temperature water and discharge medium-temperature water to a plurality of medium-temperature water supply pipes 157b, such as five medium-temperature water supply lines 157b. The high-temperature water pumps 154 and the medium-temperature water pumps 156 may be water pumps. The high-temperature water pumps 154 and the medium-temperature water pumps 156 may be controlled to adjust a supply flow rate or a supply speed of high-temperature water and medium-temperature water.

The high-temperature water supply pipes 157a and the medium-temperature water supply pipes 157b may be connected to a plurality of mixing connectors 158, e.g., five mixing connectors 158. The mixing connectors 158 may each be Y-shaped. Accordingly, the high-temperature water supplied to the high-temperature water supply pipes 157a and the medium-temperature water supplied to the medium high-temperature water supply pipes 157b may be mixed to discharge hot water of the desired temperature.

A plurality of first hot water supply pipes 160, such as five first hot water supply pipes 160, may be connected to the mixing connectors 158. Hot water supplied to the hot water supply pipes 160 may be supplied to second hot water supply pipes 166, such as five second hot water supply pipes 166, through hot water control valves 165, such as solenoid valves. The hot water control valves 165 may be controlled by the user interface unit 118 in FIGS. 2 and 3.

In FIG. 8, reference number 176 may denote a wiring line electrically connecting the high-temperature water boiler 5 to the medium-temperature water boiler 6. The first hot water supply pipes 160 and the second hot water supply pipes 166 are separately shown in FIG. 8 for convenience, but may be one hot water supply pipe. In FIG. 8, water level detection sensors 172 and 174 detecting a water level of high-temperature water or cold water may be installed in the high-temperature water boiler tank 134. Water level detection sensors detecting a water level of internal medium-temperature water or cold water inside may also be installed in the medium-temperature water boiler tank 136.

As shown in FIG. 7, a first drain pipe 143 discharging internal hot and cold water or high-temperature water may be installed in the high-temperature water boiler tank 134. A second drain pipe 145 discharging internal cold and hot water or medium-temperature water may be installed in the medium-temperature water boiler tank 136. The first drain pipe 143 and the second drain pipe 145 may be connected to a second drain unit 164. An overflow unit 162 discharging hot water overflowing from the high-temperature water boiler tank 134, the medium-temperature water boiler tank 136, and various pipes may be installed in a lower portion of the water heater body 130.

The water heater system 7 may include a water heater control unit 168 controlling the high-temperature water boiler 5 and the medium-temperature water boiler 6. The water heater control unit 168 may control various elements included in the high-temperature water boiler 5 and the medium-temperature water boiler 6. The water heater system 7 may include an alternating current control unit 170 applying current to heating wires included in the high-temperature water boiler 5 and the medium-temperature water boiler 6.

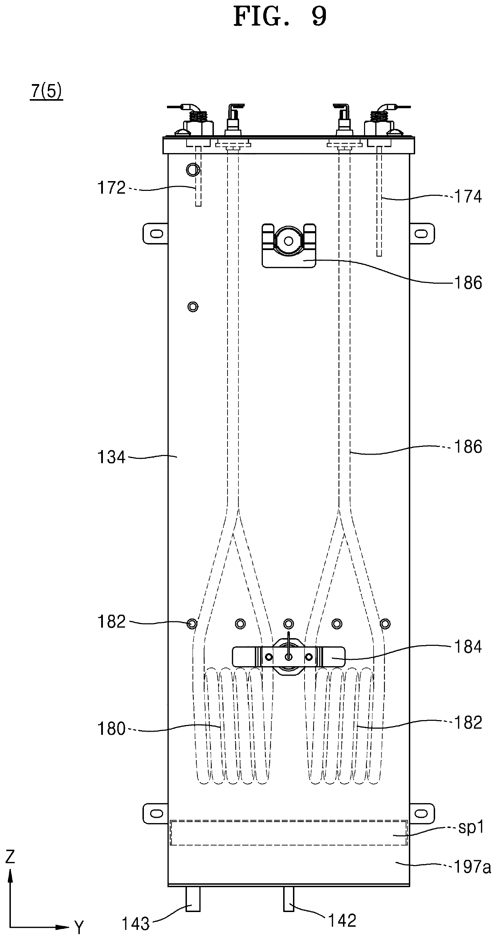

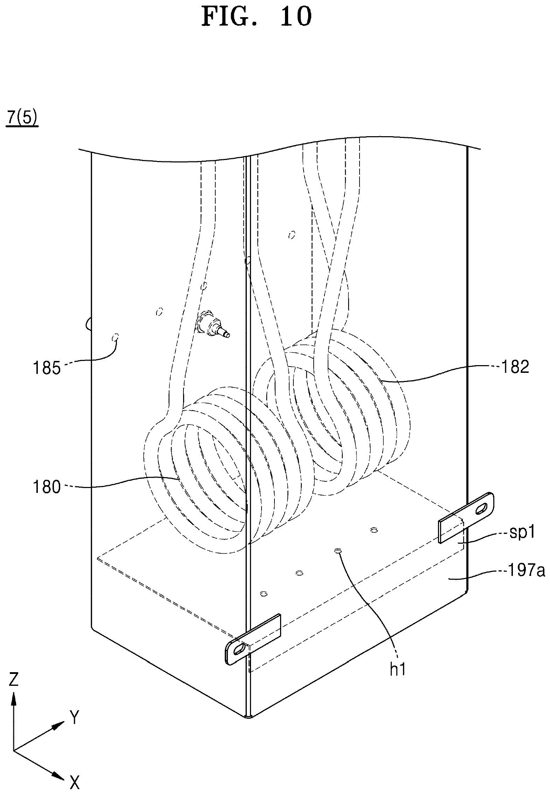

FIG. 9 is a front view illustrating a high-temperature water boiler included in the water heater system of the automatic DCM of the present disclosure. FIG. 10 is a diagram for illustrating heat wires included in the high-temperature water boiler of FIG. 9.

Specifically, the water heater system 7 of the automatic DCM of FIG. 1 of the present disclosure may include the high-temperature water boiler 5. The high-temperature water boiler 5 may include the high-temperature water tank 134. A lid of the high-temperature water tank 134 may be opened and closed. The water level detection sensors 172 and 174 detecting a water level of cold water or high-temperature water may be installed in the high-temperature water boiler tank 134. The water level detection sensors 172 and 174 may include the high water level detection sensor 172 and the low water level detection sensor 174.

A plurality of hot wires 180 and 182, i.e., the first heating wire 180 and the second heating wire 182, in the high-temperature water tank 134 may be located in the high-temperature water boiler 5. The first heating wire 180 and the second heating wire 182 are physically spaced apart from each other and electrically connected to each other. The first heating wire 180 and the second heating wire 182 may be connected to a wiring line 186 installed from the top.

A plurality of high-temperature water outlets 185 discharging high-temperature water may be installed in the high-temperature water tank 134. The high-temperature water discharge pipes 150 of FIG. 8 may be connected to the high-temperature water outlets 185. A first temperature sensor 184 may be installed inside the high-temperature water tank 134. The first temperature sensor 184 may measure the temperature inside the high-temperature water tank 134. A first bimetal switch 178 may be installed on an upper side of the high-temperature water tank 134 to prevent overheating of the high-temperature water tank 134 and block the risk of fire.

A first cold water temporary storage space 197a separated by a first separation plate sp1 may be provided in a lower portion of the high-temperature water tank 134. The reasons for installing the first cold water temporary storage space 197a are as follows. When cold water (or room temperature water) comes into direct contact with the first and second heating wires 180 and 182, a temperature drop phenomenon occurs due to high-temperature water located at the top of the high-temperature water tank 134 and cold water located at the bottom thereof, and the temperature is equalized due to convection only over time. Cold water introduced to reduce the effect of temperature drop due to the introduction of cold water and a temperature difference inside the high-temperature water tank 134 is supplied to the first cold water temporary storage space 197a. First holes h 1 are drilled in an upper portion of the first cold water temporary storage space 197a so that cold water is slowly mixed into the high-temperature water tank 134, thereby reducing a temperature change inside the high-temperature water tank 134.

The first cold water supply pipe 142 and the first drainage pipe 143 may be installed in the lower portion of the high-temperature water tank 134. Accordingly, when the high-temperature water boiler 5 is repaired or is not used for a long time, drainage is possible, thereby preventing freezing of the high-temperature water tank 134 or the occurrence of scale.

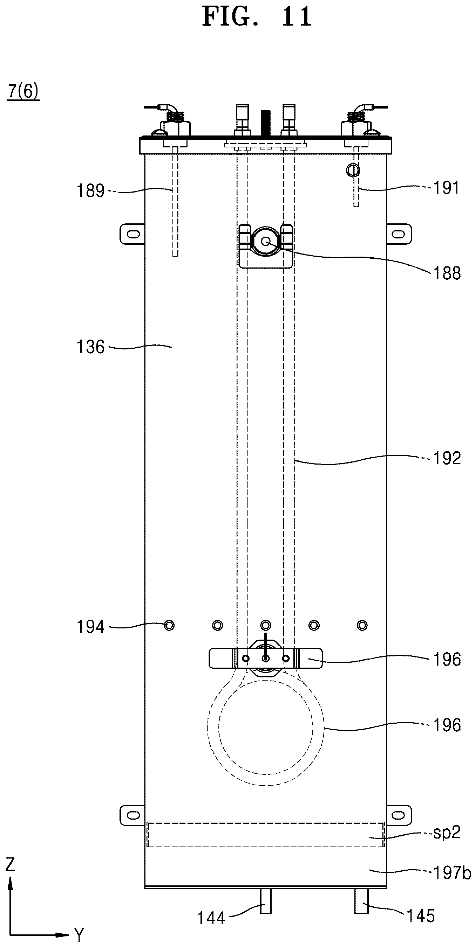

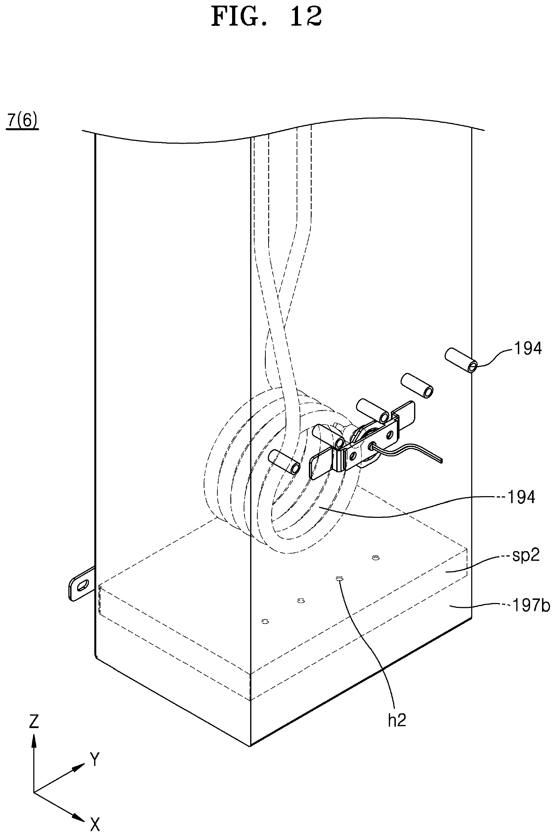

FIG. 11 is a front view illustrating a medium-temperature water boiler included in the water heater system of the automatic drip coffee machine of the present disclosure. FIG. 12 is a diagram illustrating a heating wire included in the medium-temperature water boiler of FIG. 11.

Specifically, the water heater system 7 of the automatic DCM of FIG. 1 of the present disclosure may include the medium-temperature water boiler 6. The medium-temperature water boiler 6 may include the medium-temperature water tank 136. The lid of the medium-temperature water tank 136 may be opened and closed. Water level detection sensors 189 and 191 detecting a water level of cold water or medium-temperature water may be installed in the medium-temperature water tank 134. The water level detection sensors 189 and 191 may include the low water level detection sensor 189 and the high water level detection sensor 181.

One third heating wire 190 in the medium-temperature water tank 136 may be located in the medium-temperature water boiler 6. The third heating wire 190 may be connected to a wiring line 192 installed from the top. A plurality of medium-temperature water outlets 194 discharging medium-temperature water may be installed in the medium-temperature water tank 136. The medium-temperature water discharge pipes 152 of FIG. 8 may be connected to the medium-temperature water outlets 194. A second temperature sensor 196 may be installed inside the medium-temperature water tank 134. The second temperature sensor 196 may measure the temperature inside the medium-temperature water tank 136. A second bimetal switch 188 may be installed on an upper side of the medium-temperature water tank 136 to prevent overheating of the medium-temperature water tank 136 and block the risk of fire.

A second cold water temporary storage space 197b separated by a second separation plate sp2 is provided in a lower portion of the medium-temperature water tank 136. Second holes h 2 may be installed in the second separation plate sp2. The reasons for installing the second cold water temporary storage space 197b are the same as the first cold water temporary storage space 197a described above, and thus, a description thereof is omitted herein. The second cold water supply pipe 144 and the second drainage pipe 145 may be installed in the lower portion of the medium-temperature water tank 136. Accordingly, when the medium-temperature water boiler 6 is repaired or is not used for a long time, drainage is possible, thereby preventing freezing of the medium-temperature water tank 136 or the occurrence of scale.

FIGS. 13 to 17 are diagrams for illustrating a drip nozzle transfer module included in the drip system of the automatic DCM of the present disclosure.

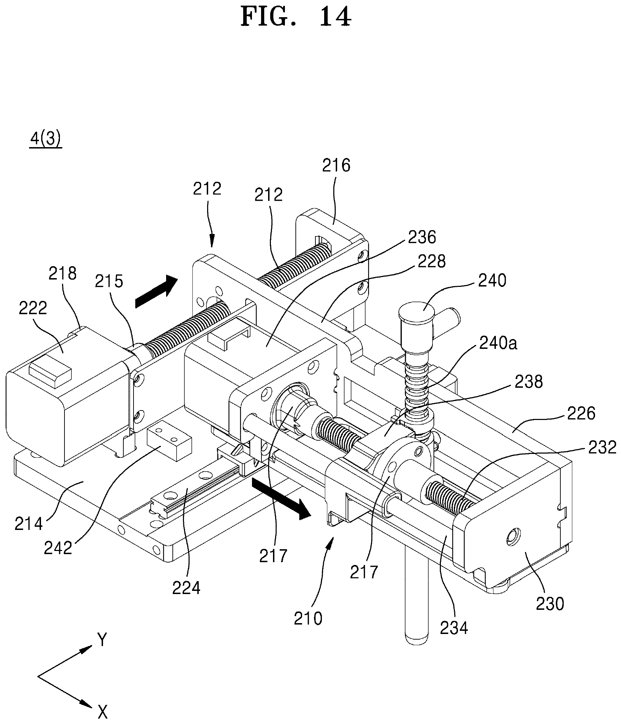

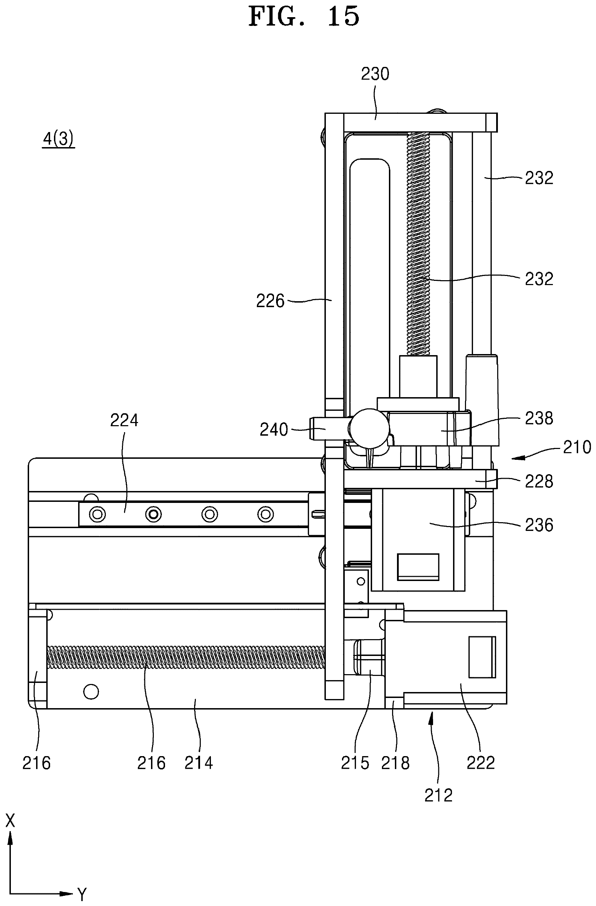

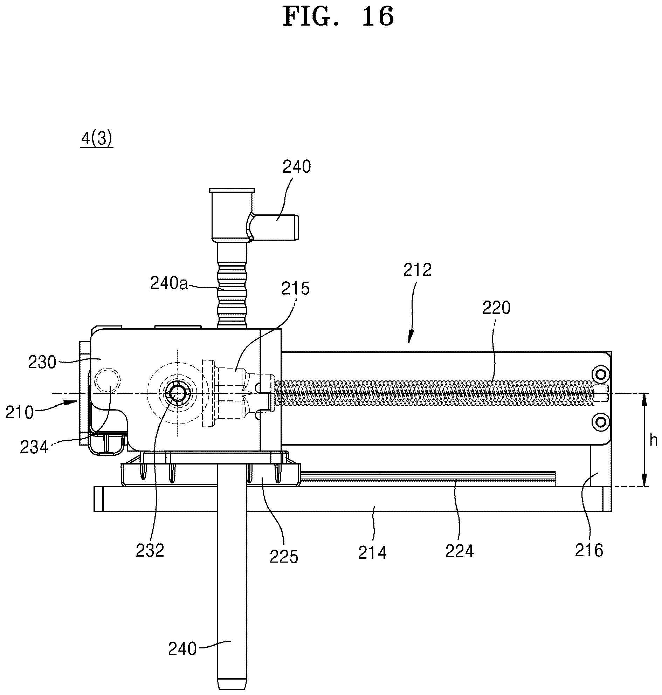

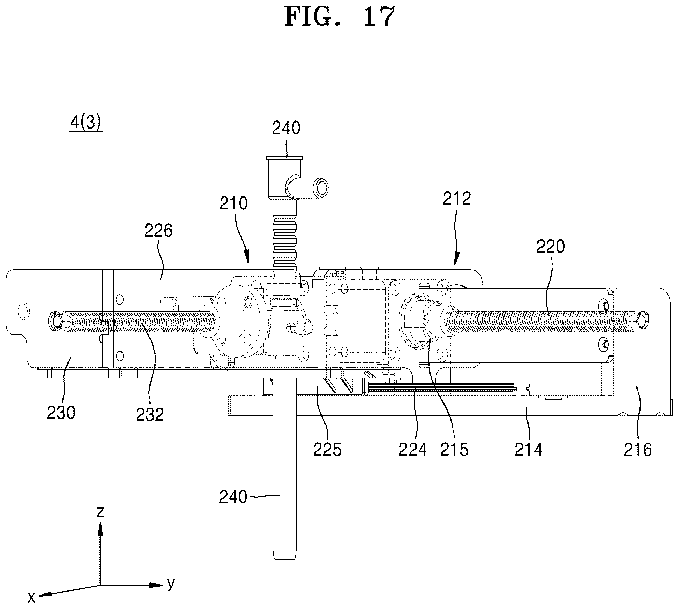

Specifically, FIG. 13 is a perspective view of the drip nozzle transfer module 3 included in the drip system 4. FIG. 14 is a perspective view showing the state in which the drip nozzle transfer module 3 has moved, FIG. 15 is a top view of the drip nozzle transfer module 3, and FIGS. 16 and 17 are side views of the drip nozzle transfer module 3.

The drip system 4 of the present disclosure may include the plurality of drip nozzle transfer modules 3. In other words, the plurality of drip nozzle transfer modules 3 corresponding to the drippers 2 of FIG. 1 and 112 of FIG. 2 may be installed in the drip system 4 of the present disclosure. Referring to FIGS. 13 to 17, only one drip nozzle transfer module 3 is described for convenience.

In addition, the drip nozzle transfer module 3 may include a drip nozzle 240. The high-temperature water supply pipe 166 of FIGS. 7 and 8 described above may be connected to the drip nozzle 240. The drip nozzle 240 may discharge hot water of a desired temperature supplied through the high-temperature water supply pipe 166 of FIGS. 7 and 8 to the drip container 116 of FIG. 2 located in the container seating portion 103 through the dripper 112.

As shown in FIGS. 13 to 17, the drip nozzle transfer module 3 may transfer the drip nozzle 240 in the X-axis direction and the Y-axis direction on a horizontal plane with respect to the floor supported by the table 1 of FIG. 1 or the drip system 4. The drip nozzle 240 may include a fixing member 240a capable of moving and fixing the drip nozzle 240 in the vertical direction (Z direction) with respect to the floor where the drip system 4 is located. Accordingly, the drip nozzle 240 may vary in length in the vertical direction (Z direction).

When the drip nozzle 240 includes the fixing member 240a, a drop distance of hot water supplied from the drip nozzle 240 to the dripper 112 of FIG. 1 may be easily adjusted. The drop distance may be adjusted to optimize the quality of drip coffee. The drip nozzle transfer module 3 may include an X-axis transfer module 210 transferring the drip nozzle 240 in the X-axis direction and a Y-axis transfer module 212 transferring the drip nozzle 240 in the Y-axis direction. The X-axis and the Y-axis are arbitrarily set, and the present disclosure is not limited thereto.

The Y-axis transfer module 212 may transfer the drip nozzle 240 in the Y-axis direction along a Y-axis transfer screw 220 on the horizontal plane with respect to the floor supported by the table 1 of FIG. 1 or the drip system 4. The X-axis transfer module 210 may be installed at one end of the Y-axis transfer module 212 and mechanically connected to the Y-axis feed module 212 to transfer the drip nozzle 240 in the X-axis direction along an X-axis transfer screw 232 on the horizontal plane with respect to the floor supported by the table 1 of FIG. 1 or the drip system 4.

The Y-axis transfer module 212 and the X-axis transfer module 210 may operate independently to transfer the drip nozzle 240 in the Y-axis and/or X-axis directions. The X-axis transfer module 210 is installed at one end of the Y-axis transfer module 212, thereby easily transferring the drip nozzle 240 in the Y-axis direction and the X-axis direction smoothly without axial resistance.

As shown in FIG. 14, the drip nozzle 240 may partially move in the Y-axis direction by using the Y-axis transfer module 212 and partially move in the X-axis direction by using the X-axis transfer module 210. The Y-axis transfer module 212 may be limited and transferred by a Y-axis limit switch 242 in the Y-axis direction. The X-axis transfer module 210 may be limited and transferred by an X-axis limit switch 244 in the X-axis direction.

Here, with reference to FIGS. 13 to 17, the Y-axis transfer module 212 and the X-axis transfer module 210 are described in detail.

The Y-axis transfer module 212 may include a base plate 214 extended in the Y-axis direction. The base plate 214 may be installed horizontally with respect to the floor supported by the table 1 of FIG. 1 or the drip system 4. The base plate 214 may have a horizontal X-Y plane with respect to the floor supported by the table 1 of FIG. 1 or the drip system 4.

The Y-axis transfer module 212 may include a Y-axis transfer motor 222 fixed to a Y-axis motor support member 218 and installed on the base plate 214. The Y-axis transfer motor 222 is mechanically connected to the Y-axis transfer screw 220 extending to the Y-axis. The Y-axis transfer screw 220 is mechanically connected to a Y-axis screw support member 216 on the base plate 214.

The Y-axis transfer module 212 includes a Y-axis transfer member 226 extending in the X-axis direction and mechanically connected to the Y-axis transfer screw 220, and a Y-axis guide lane member 224 guiding the Y-axis transfer member 226 on the base plate 214. The Y-axis guide lane member 224 may be a bar type guide member.

An opening into which the Y-axis transfer screw 220 is inserted is installed in one side of the Y-axis transfer member 226, and thus, the Y-axis transfer member 226 and the Y-axis transfer screw 220 may be mechanically connected to each other. The Y-axis guide lane member 224 extends in the Y-axis direction. A Y-axis flywheel 215 that suppresses rotational vibration is installed in the Y-axis feed screw 220. In addition, a guide bearing 225 may be installed on the Y-axis guide lane member 224 to reduce vibration and twisting when the Y-axis transfer member 226 moves to the Y-axis.

The X-axis transfer module 210 includes an X-axis transfer motor 236 fixed to an X-axis motor support member 228 in the X-axis direction perpendicular to the Y-axis transfer member 226. The X-axis transfer motor 236 is mechanically connected to the X-axis transfer screw 232. An X-axis flywheel 217 that suppresses rotational vibration is installed in the X-axis transfer screw 232. The X-axis transfer screw 232 is mechanically connected to the X-axis screw support member 230 in the X-axis direction perpendicular to the Y-axis transfer member 226.

The X-axis feed module 210 includes a drip nozzle support member 238 mechanically connected to the X-axis transfer screw 232 and an X-axis guide lane member 234 spaced apart from the X-axis transfer screw 232 to guide the X-axis transfer screw 232. The drip nozzle 240 may penetrate the drip nozzle support member 238 up and down and be installed in the Z axis direction. The X-axis guide lane member 234 may be a cylindrical member.

An opening into which the X-axis transfer screw 232 is inserted is installed in one side of the drip nozzle support member 238, and thus, the drip nozzle support member 238 and the X-axis transfer screw 232 may be mechanically connected to each other. In addition, an opening into which the X-axis guide lane member 234 is inserted is provided in one side of each of the drip nozzle support member 238 and the X-axis screw support member 230, so that the X-axis guide lane member 234 may guide the X-axis transfer screw 232. The X-axis guide lane member 234 may reduce vibration and twisting when the drip nozzle 240 moves to the X-axis.

As shown in FIG. 16, a height h from the base plate 214 to each of the Y-axis transfer screw 220, the X-axis transfer screw 232, and the X-axis guide lane member 234 may be the same. When the Y-axis transfer screw 220, the X-axis transfer screw 232, and the X-axis guide lane member 234 are located at the same height, the Y-axis transfer module 212 and the X-axis transfer module 210 may easily transfer the drip nozzle 240 installed in the drip nozzle support member 238 to the Y-axis and the X-axis smoothly without axial resistance. As described above, the drip nozzle transfer module 3 of the present disclosure may easily transfer the drip nozzle 240 to the Y-axis and the X-axis smoothly without axial resistance, thereby precisely controlling drip patterns of hot water supplied to the dripper 112.

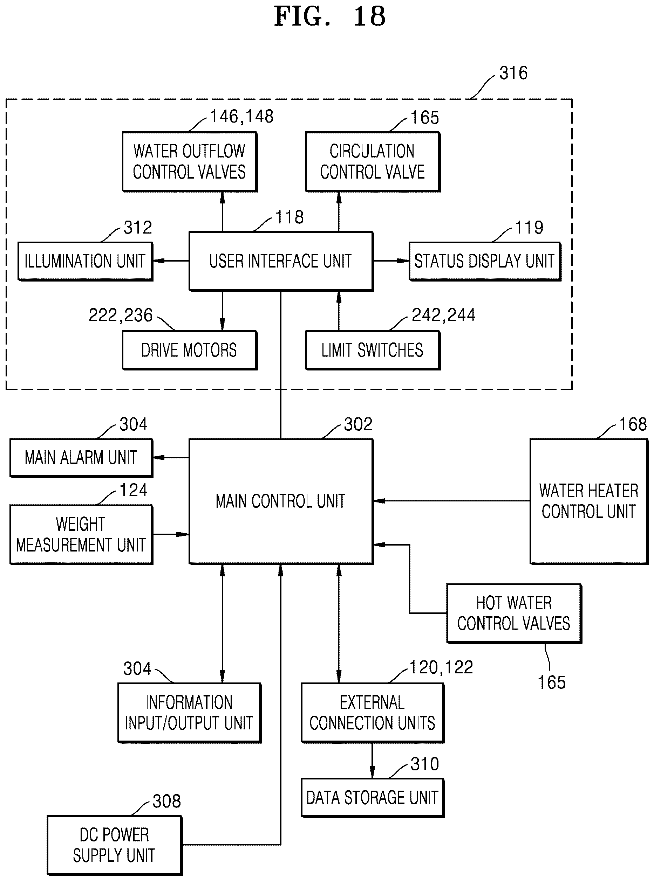

FIG. 18 is a block diagram illustrating a configuration of the drip system of the automatic DCM of the present disclosure.

Specifically, the drip system 4 of FIG. 1 of the automatic DCM of FIG. 1 of the present disclosure may include the user interface unit 118 and a main control unit 302. The user interface unit 118 may correspond to the user interface unit 118 of FIGS. 2 and 3. The user interface unit 118 may be a touch panel.

The user interface unit 118 may control water outflow control valves 146 and 148. The water outflow control valves 146 and 148 may respectively correspond to the first cold water control valve 146 and the second cold water control valve 148 of FIG. 7. The user interface unit 118 may control the circulation control valve 165. The circulation control valve 165 may correspond to the hot water control valves 165 of FIG. 7.

The user interface unit 118 may control an illumination unit 312 and the status display unit 119. The illumination unit 312 may indicate whether the user interface unit 118 is operating. The status display unit 119 may inform an extraction start of drip coffee, an extraction end of drip coffee, and an extraction state of drip coffee by colors.

The user interface unit 118 may control drive motors 222 and 236 and limit switches 242 and 244. The drive motors 222 and 236 may correspond to the X-axis and Y-axis transfer motors 222 and 236 of the drip nozzle transfer module 3 of FIGS. 13 to 17. The limit switches 242 and 244 may correspond to the X-axis and Y-axis limit switches 242 and 244 of the drip nozzle transfer module 3 of FIGS. 13 to 16.

The user interface unit 118 may input, store, modify, inquire and delete an extraction recipe related to extraction of drip coffee. The user interface unit 118 may control the drippers 112 of FIG. 2 or the drip nozzles 240 of FIGS. 2 and 3 to start and end extraction of drip coffee. In FIG. 18, portions denoted by reference number 316 may be prepared as many as the number of the drippers 112 of FIG. 2 or the drip nozzles 240 of FIGS. 2 and 3.

The user interface unit 118 may be electrically connected to the main control unit 302. The main control unit 302 may control a main alarm unit 306, the weight measurement unit 124, and the hot water control valve 165. The main alarm unit 306 may include a speaker informing an operation state of the main control unit 302.

The weight measurement unit 124 may measure the weight (or load) of drip coffee included in the drip container 116 of FIG. 2. The weight measurement unit 124 may measure the pure weight of drip coffee in the drip container 116 and send the pure weight to the main control unit 302 in real time, thereby improving the extraction accuracy of drip coffee. The hot water control valve 165 may correspond to the hot water control valves 165 of FIG. 7.

The main control unit 302 may control an information input/output unit 304, external connection units 120 and 122, and a data storage unit 310. The information input/output unit 304 may be a device, for example, a keyboard, that inputs parameters for controlling the main control unit 302. In some embodiments, the information input/output units 304 may be provided as many times as the user interface units 118.

The external connection units 120 and 122 may respectively correspond to the connection terminals 120 and 122 of FIG. 5. The data storage unit 310 may be a data storage device, for example, a USB or a server. The main control unit 302 may be connected to a DC power supply unit 308. The DC power supply unit 308 may be obtained by converting AC power.

The main control unit 302 may control the entire function of the automatic DCM of FIG. 1. The main control unit 302 may input various information through a wired function or a wireless function, and display a drip coffee extraction progress with letters and graphs. The main control unit 302 may select a result extracted by the drip coffee extraction recipe and store the result as a new drip coffee recipe.

The main control unit 302 may access an Internet server to inquire a drip coffee extraction performance or the operation status of the automatic DCM of FIG. 1. The main control unit 302 may download a shared drip coffee extraction recipe of another person through the Internet server. The main control unit 302 may be electrically connected to the water heater control unit 168. The water heater control unit 168 will be described in detail below.

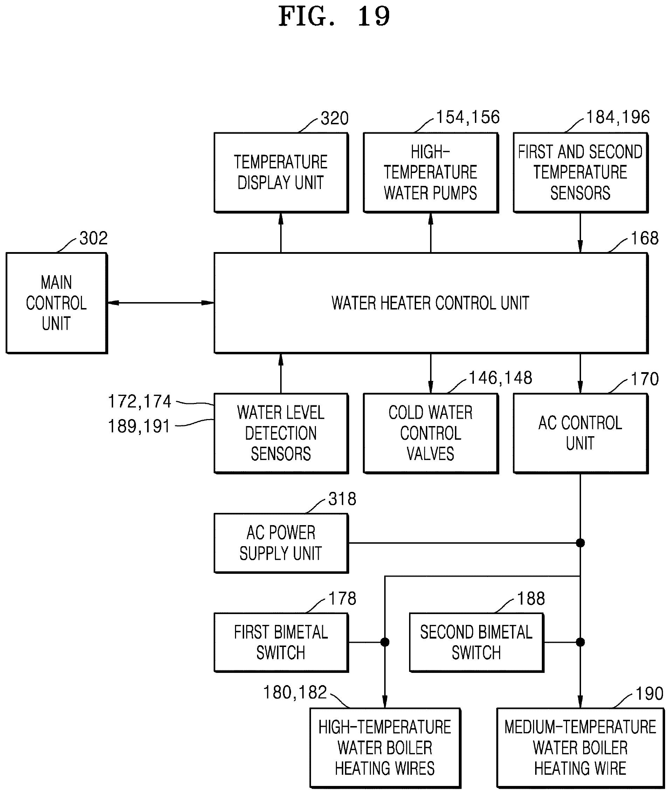

FIG. 19 is a block diagram illustrating a configuration of the water heater system of the automatic DCM of the present disclosure.

Specifically, the water heater system 7 of FIG. 1 of the automatic DCM of FIG. 1 of the present disclosure may include the water heater control unit 168. The water heater control unit 168 may be connected to the main control unit 302 of FIG. 18.

The water heater control unit 168 may control the temperature display unit 320, the hot water pumps 154 and 156, and the temperature sensors 184 and 196. The temperature display unit 320 may display the temperature of each of the high-temperature water boiler 5 of FIGS. 9 and 10 and the medium-temperature water boiler 6 of FIGS. 11 and 12. The hot water pumps 154 and 156 may respectively correspond to the high-temperature water pumps 154 and the medium-temperature water pumps 156 of FIGS. 7 and 8. The temperature sensors 184 and 196 may respectively correspond to the first temperature sensor 184 of the high-temperature water boiler 5 of FIGS. 9 and 10 and the second temperature sensor 196 of the medium-temperature water boiler 6 of FIGS. 11 and 12.

The water heater control unit 168 may control the water level detection sensors 172, 174, 189, 191, the cold water control valves 146 and 148, and the AC control unit 170. The water level detection sensors 172, 174, 189, and 191 may include the water level detection sensors 172 and 174 of the high-temperature water boiler 5 of FIGS. 9 and 10 and the water level detection sensors 189 and 191 of the medium-temperature water boiler 6 of FIGS. 11 and 12. The cold water control valves 146 and 148 may respectively correspond to the first cold water control valve 146 and the second cold water control valve 148 of FIG. 7. The AC control unit 170 may be a control unit applying current to the heating wires 180, 182, and 190 included in the high-temperature water boiler 5 and the medium-temperature water boiler 6.

An AC power supply unit 318 may be connected to the AC control unit 170. The AC power supply unit 318 may be connected to the first heating wire 180 and the second heating wire 182 (or high-temperature water boiler heating wires) of the high-temperature water boiler 5 of FIGS. 9 and 10 and the third heating wire 190(or medium-temperature water boiler heating wire) of the medium-temperature water boiler 6 of FIGS. 11 and 12. In addition, the AC power supply unit 170 to which the first bimetal switch 178 is connected may control current supplied to the high-temperature water boiler heating wires 180 and 182 of the high-temperature water boiler 5 of FIGS. 9 and 10. In addition, the AC power supply unit 170 to which the second bimetal switch 188 is connected may control current supplied to the medium-temperature water boiler heating wire 190 of the medium-temperature water boiler 6 of FIGS. 11 and 12.

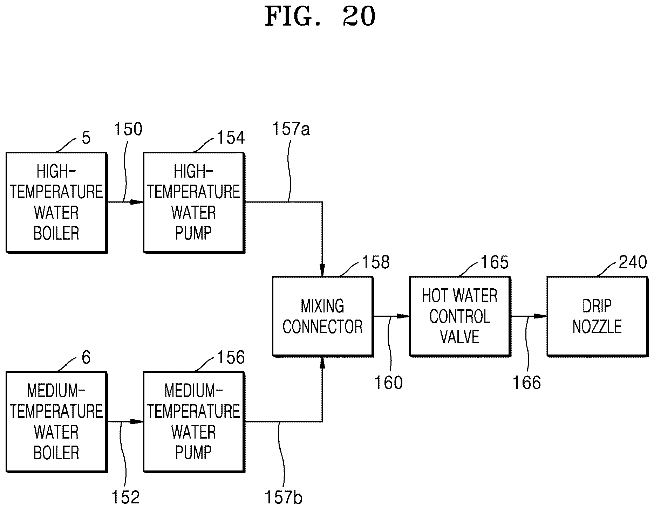

FIG. 20 is a diagram illustrating a first embodiment of a hot water flow in the automatic DCM of the present disclosure.

Specifically, the automatic DCM of FIG. 1 discharges high-temperature water from the high-temperature water boiler 5 including the high-temperature water tank 134 of FIGS. 7 and 8. The automatic DCM of FIG. 1 discharges medium-temperature water from the medium-temperature water boiler 6 including the medium-temperature water boiler tank 136 of FIGS. 7 and 8.

High-temperature water is introduced into the high-temperature water pump 154 through the high-temperature water discharge pipe 150, and medium-temperature water is discharged to the medium-temperature water pump 156 through the medium-temperature water discharge pipe 152. As described above, a plurality of high-temperature water discharge pipes 150 are provided, and a plurality of high-temperature water pumps 154 are also provided in response to the plurality of high-temperature water discharge pipes 150. Like the plurality of high-temperature water discharge pipes 150, a plurality of medium-temperature water discharge pipes 152 are provided, and a plurality of medium-temperature water pumps 156 are also provided in response to the plurality of medium-temperature water discharge pipes 152.

The high-temperature water pumped by using the high-temperature water pump 154 may be introduced into the mixing connector 158 through the high-temperature water supply pipe 157a. The medium high-temperature water pumped by using the medium-temperature water pump 156 may be introduced into the mixing connector 158 through the medium-temperature water supply pipe 157b. As described above, a plurality of mixing connectors 158 may be provided. The high-temperature water and the medium-temperature water introduced into the mixing connectors 158 may be mixed to make hot water of a desired temperature. A mixing ratio of the high-temperature water and the medium-temperature water may be determined according to a set temperature of hot water. The mixing ratio of the high-temperature water and the medium-temperature water may be determined by a program provided in a main control unit. For example, the mixing ratio of the high-temperature water and the medium-temperature water may be 3 to 1.

Hot water passing through the mixing connector 158 may be discharged to the drip nozzle 240 through the first hot water supply pipe 160 and the second hot water supply pipe 166. The hot water control valve 165 may be installed between the first hot water supply pipe 160 and the second hot water supply pipe 166. The first hot water supply pipe 160, the second hot water supply pipe 166, and the hot water control valve 165 may each be provided in plurality.

The hot water control valve 165 may be a solenoid valve having two flow paths, i.e., a twoway solenoid valve. An amount of hot water discharged to the drip nozzle 240 may be adjusted through on-off operations of the hot water control valve 165 or the operation time control of the hot water control valve 165.

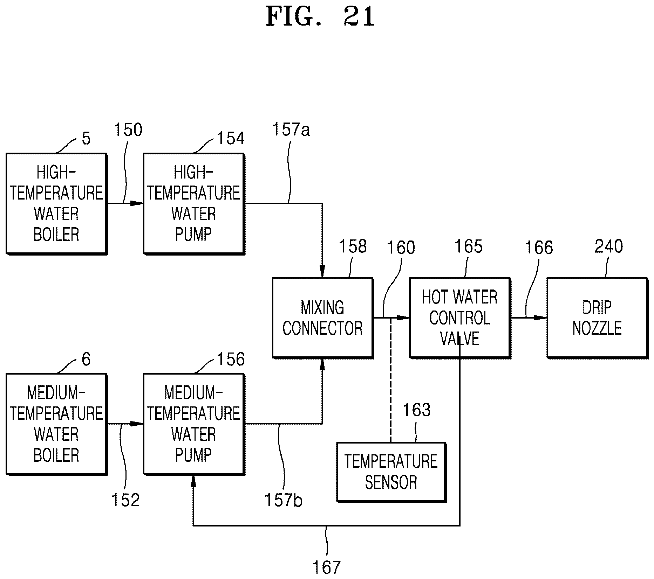

FIG. 21 is a diagram illustrating a second embodiment of a hot water flow in the automatic DCM of the present disclosure.

Specifically, the hot water flow of FIG. 21 may be the same as that of FIG. 20 except that a hot water circulation pipe 167 is further disposed. The same descriptions of FIG. 2 as in FIG. 20 are briefly given or omitted. As described above, the automatic DCM of FIG. 1 may make hot water of a desired temperature by mixing high-temperature water and medium-temperature water introduced into the mixing connector 158.

Hot water passing through the mixing connector 158 may be discharged to the drip nozzle 240 through first hot water supply pipe 160, the hot water control valve 165, and the second hot water supply pipe 166. In some embodiments, the temperature sensor 163 capable of measuring the temperature of hot water may be installed in the first high-temperature water supply pipe 160. The hot water circulation pipe 167 may further be connected to the hot water control valve 165. The hot water control valve 165 may be a solenoid valve having three flow paths, i.e., a three-way solenoid valve.

When the temperature of hot water measured by the temperature sensor 163 is low, the temperature of hot water may be increased by circulating hot water to the medium-temperature water boiler 6 through the hot water circulation pipe 167. The hot water circulation pipe 167 may be a hot water recovery pipe. An amount of hot water discharged to the drip nozzle 240 may be adjusted through on-off operations of the hot water control valve 165 or the operation time control of the hot water control valve 165.

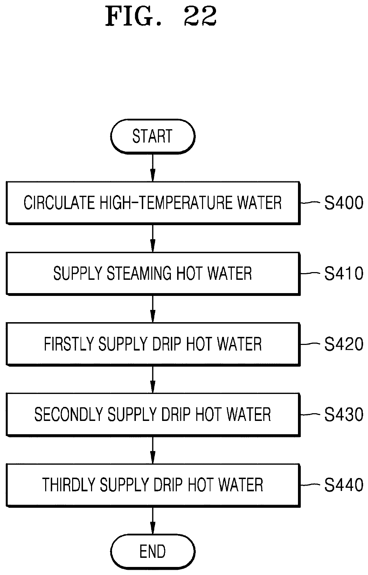

FIG. 22 is a flowchart for illustrating a method of making drip coffee using the automatic DCM of the present disclosure.

Specifically, the method of making drip coffee described below may include a method of making drip coffee using one drip nozzle or a plurality of drip nozzles. The method of making drip coffee may include a high-temperature water circulation operation S400. The high-temperature water circulation operation S400 may be a preliminary operation for making drip coffee.

Only high-temperature water may be supplied to the hot water supply pipes 160 and 166 of FIGS. 7 and 8 by using the high-temperature water boiler 5 of FIGS. 7 and 8, and high-temperature water may be supplied to the drip nozzles 240 of FIGS. 1 and 2 through the hot water supply pipes 160 and 166 and discharged to the outside. The method of making drip coffee is described below as an example of extracting 240 ml of drip coffee from 20 g of coffee powder.

The method of making drip coffee may include a steaming hot water supply operation S410. The steaming hot water supply operation S410 supplies hot water of a first temperature, such as 90 °C, to the hot water supply pipes 160 and 166 of FIGS. 7 and 8 by using the high-temperature water boiler 5 of FIGS. 7 and 8 and the medium-temperature water boiler 6 of FIGS. 7 and 8.

The hot water of the first temperature supplied through the hot water supply pipes 160 and 166 of FIGS. 7 and 8 may be supplied to the dripper 112 of FIG. 1 including a filtration filter containing coffee powder through the drip nozzle 240 of FIGS. 1 and 2. The hot water supplied in the steaming hot water supply operation S410 supplies a first amount, such as 24 ml.

The method of making drip coffee may include a first drip hot water supply operation S420. The first drip hot water supply operation S420 supplies hot water of a second temperature, such as 87 °C or 90 °C, to the hot water supply pipes 160 and 166 of FIGS. 7 and 8 by using the high-temperature water boiler 5 of FIGS. 7 and 8 and the medium-temperature water boiler 6 of FIGS. 7 and 8. In some embodiments, the second temperature may be different from the first temperature. The second temperature may be lower or equal to the first temperature.

The hot water of the second temperature supplied through the hot water supply pipes 160 and 166 may be firstly supplied to the dripper 112 of FIG. 1 including the filtration filter containing coffee powder through the drip nozzle 240 of FIGS. 1 and 2. The hot water supplied in the first drip hot water supply operation S420 supplies a second amount, such as 120 ml. In some embodiments, the second amount may be different from the first amount. The second amount may be greater than the first amount.

The method of making drip coffee may include a second drip hot water supply operation S430. The second drip hot water supply operation S430 supplies hot water of a third temperature, such as 85 °C or 90 °C, to the hot water supply pipes 160 and 166 of FIGS. 7 and 8 by using the high-temperature water boiler 5 of FIGS. 7 and 8 and the medium-temperature water boiler 6 of FIGS. 7 and 8. In some embodiments, the third temperature may be different from the second temperature. The third temperature may be lower or equal to the second temperature.

The hot water of the third temperature supplied through the hot water supply pipes 160 and 166 may be secondly supplied to the dripper 112 of FIG. 1 including the filtration filter containing coffee powder through the drip nozzle 240 of FIGS. 1 and 2. The hot water supplied in the second drip hot water supply operation S430 supplies a third amount, for example, 72 ml. In some embodiments, the third amount may be different from the second amount. The third amount may be smaller than the second amount.

The method of making drip coffee may include a third drip hot water supply operation S440. The third drip hot water supply operation S440 supplies hot water of a third temperature, such as 80 °C or 90 °C, to the hot water supply pipes 160 and 166 of FIGS. 7 and 8 by using the high-temperature water boiler 5 of FIGS. 7 and 8 and the medium-temperature water boiler 6 of FIGS. 7 and 8. In some embodiments, the fourth temperature may be different from the third temperature. The fourth temperature may be lower or equal to the third temperature.

The hot water of the fourth temperature supplied through the hot water supply pipes 160 and 166 may be thirdly supplied to the dripper 112 of FIG. 1 including the filtration filter containing coffee powder through the drip nozzle 240 of FIGS. 1 and 2. The hot water supplied in the third drip hot water supply operation S440 supplies a fourth amount, for example, 48 ml. In some embodiments, the fourth amount may be different from the third amount. The fourth amount may be smaller than the third amount.

Drip coffee may be made through such a drip coffee making process. In the present embodiment, the first to third drip hot water supply operations S420 to S440 are described as an example, but n (n is a positive integer) drip hot water supply operations may be used as necessary. In addition, the temperature or amount of hot water may be freely adjusted in each of drip hot water supply operations, thereby improving the quality of drip coffee.

### Industrial Applicability

The present disclosure may be applied to the field of coffee machine. In particular, the present disclosure may be applied to the field of automatic drip coffee machine.

## Claims

1. An automatic drip coffee machine comprising:
a water heater system comprising a high-temperature water boiler and a medium-temperature water boiler disposed away from the high-temperature water boiler; and
a drip system comprising a plurality of drip nozzles configured to receive mixed hot water of a desired temperature according to high-temperature water heated by mixing the high-temperature water boiler and medium-temperature water heated by the medium-temperature water boiler, and a plurality of drip nozzle transfer modules configured to respectively supply the mixed hot water to a plurality of drippers while respectively transferring the plurality of drip nozzles in an X-axis direction and a Y-axis direction,
wherein the water heater system comprises a water heater control unit configured to control the high-temperature water boiler and the medium-temperature water boiler, and
the drip system comprises a plurality of user interface units configured to control the plurality of drip nozzles and the plurality of drip nozzle transfer modules, and a main control unit configured to control the water heater control unit and the plurality of user interface units.

2. The automatic drip coffee machine of claim 1, wherein the high-temperature water boiler is configured to heat cold and hot water to 85 °C to 98 °C, and the medium-temperature water boiler is configured to heat cold and hot water to 70 °C to 84 °C

3. The automatic drip coffee machine of claim 1, wherein the water heater system includes a plurality of high-temperature water discharge pipes configured to discharge high-temperature water heated by the high-temperature water boiler, a plurality of medium-temperature water discharge pipes configured to discharge medium-temperature water heated by the medium-temperature water boiler, a plurality of mixing connectors connected to the plurality of high-temperature water discharge pipes and the plurality of medium-temperature water discharge pipes and configured to mix the high-temperature water and the medium-temperature water, and a plurality of hot water supply pipes connected to the plurality of mixing connectors.

4. The automatic drip coffee machine of claim 3, wherein the plurality of high-temperature water discharge pipes are respectively connected to the plurality of mixing connectors through a plurality of high-temperature water pumps, and the plurality of medium-temperature water discharge pipes are respectively connected to the plurality of mixing connectors through a plurality of medium-temperature water pumps.

5. The automatic drip coffee machine of claim 3, wherein a plurality of hot water control valves are further respectively connected to the plurality of hot water supply pipes and are controlled by the main control unit.

6. The automatic drip coffee machine of claim 1, wherein the plurality of drip nozzles each further include a fixing member capable of moving and fixing the plurality of drip nozzles in a vertical direction with respect to a floor where the drip system is located.

7. The automatic drip coffee machine of claim 1, wherein the high-temperature water boiler includes a high-temperature water tank, the high-temperature water tank includes a first cold water storage space separated by a first separation plate in a lower portion thereof, the medium-temperature water boiler includes a medium-temperature water tank, the medium-temperature water tank includes a second cold water storage space separated by a second separation plate in a lower portion thereof.

8. The automatic drip coffee machine of claim 1, wherein the plurality of drip nozzle transfer modules each include a Y-axis transfer module configured to transfer the plurality of drip nozzles in the Y-axis direction with respect to a floor where the drip system is located along a Y-axis transfer screw, and an X-axis feed module installed in one end of the axis transfer module, mechanically connected to the Y-axis feed module and configured to transfer the plurality of drip nozzles in the X-axis direction with respect to the floor where the drip system is located along an X-axis feed screw.

9. An automatic drip coffee machine comprising:
a water heater system comprising a high-temperature water boiler and a medium-temperature water boiler disposed away from the high-temperature water boiler; and
a drip system comprising a plurality of drip nozzles configured to receive mixed hot water of a desired temperature according to high-temperature water heated by mixing the high-temperature water boiler and medium-temperature water heated by the medium-temperature water boiler, and a plurality of drip nozzle transfer modules configured to respectively supply the mixed hot water to a plurality of drippers while respectively transferring the plurality of drip nozzles in an X-axis direction and a Y-axis direction,
wherein the water heater system comprises a plurality of high-temperature water discharge pipes configured to discharge high-temperature water heated by the high-temperature water boiler, a plurality of medium-temperature water discharge pipes configured to discharge medium-temperature water heated by the medium-temperature water boiler, a plurality of high-temperature water pumps respectively connected to the plurality of high-temperature water discharge pipes, a plurality of medium-temperature water pumps respectively connected the plurality of medium-temperature water discharge pipes, a plurality of high-temperature water supply pipes respectively connected to the plurality of high-temperature water pumps, a plurality of medium-temperature water supply pipes respectively connected to the plurality of medium-temperature water pumps, a plurality of mixing connectors connected to the plurality of high-temperature water supply pipes and the plurality of medium-temperature water supply pipes, and a plurality of hot water supply pipes respectively connected to the plurality of mixing connectors, and
the drip system further comprises a plurality of user interface units configured to respectively control the plurality of drip nozzles and the plurality of drip nozzle transfer modules.

10. The automatic drip coffee machine of claim 9, wherein a plurality of hot water control valves are further respectively installed in the plurality of hot water supply pipes.

11. The automatic drip coffee machine of claim 9, wherein a plurality of hot water control valves are respectively installed in the plurality of hot water supply pipes and a plurality of medium-temperature water circulation pipes connected to the medium-temperature water boiler are further respectively installed in the plurality of hot water control valves.
